# FASCICULE DE BREVET EUROPEEN

(11) **EP 2 433 044 B1**
(45) Date de publication et mention de la délivrance du brevet: **24.07.2013**
(21) Numéro de dépôt: 10722999.9
(22) Date de dépôt: 17.05.2010
(51) Int. Cl.: F16L 37/091

(54) **DISPOSITIF DE RACCORDEMENT RAPIDE POUR CIRCUITS DE FLUIDE POUVANT SUBIR D'IMPORTANTES VARIATIONS DE PRESSION**
SCHNELLVERBINDUNGSVORRICHTUNG FÜR GROSSEN DRUCKVARIATIONEN STANDHALTENDENDEN FLÜSSIGKEITSKREISE
QUICK-CONNECTION DEVICE FOR FLUID CIRCUITS CAPABLE OF BEING SUBJECTED TO LARGE PRESSURE VARIATIONS

(30) Priorité: 18.05.2009 FR 0902391
(43) Date de publication de la demande: 28.03.2012
(73) Titulaire: Parker Hannifin Manufacturing France, 74112 Annemasse (FR)
(72) Inventeur: LE QUERE, Philippe, F-35830 Betton (FR)
(74) Mandataire: Lavialle, Bruno François Stéphane
(86) Numéro de dépôt international: PCT/EP2010/056744
(87) Numéro de publication internationale: WO 2010/133554

(56) Documents cités:
- FR-A2- 2 385 024
- GB-A- 2 401 920
- US-A- 4 146 254

## Description

La présente invention concerne un dispositif de raccordement rapide pour circuits de fluide pouvant subir d'importantes variations de pression.

### ARRIERE PLAN DE L'INVENTION

La plupart des raccords à rondelle dentée comportent des dents flexibles ou mobiles élastiquement, attachées par leur racine à une couronne rigide qui est logée dans une gorge de l'alésage. Cette gorge est en général ménagée entre un épaulement de l'alésage et un insert, ce qui permet d'encastrer la couronne voire de la déformer et modifier l'inclinaison des dents si cette couronne n'est pas, au repos, dans un plan radial. Dans d'autres cas cette gorge est en totalité réalisée dans un insert pré-équipé de la rondelle. Afin que l'effort résistant d'introduction du tube ne soit pas trop important, il faut aux dents une certaine souplesse pour qu'elles s'écartent facilement au passage de l'extrémité de ce tube. Cette souplesse est obtenue par des découpages et des évidements des dents mais au détriment du pouvoir mordant de celles-ci sur la surface extérieure du tube.

Dans un perfectionnement à ce type de raccord on a déjà proposé une rondelle sensiblement tronconique dont la circonférence intérieure est de diamètre inférieur à celui du tube et est divisée en une pluralité de dents, la partie extérieure de la rondelle étant disposée dans une gorge ménagée dans l'alésage, chaque dent de la rondelle étant constituée par une palette rigide possédant une partie de racine de faible hauteur qui, au repos, s'étend dans un plan radial et une partie active inclinée sur ce plan radial, la rondelle comportant en outre, entre chaque dent, une partie périphérique de liaison élastiquement déformable pour qu'une déformation d'ensemble de la rondelle se traduise par un déplacement sans déformation des dents. Cette solution constitue une amélioration certaine de la maîtrise de la connexion mais la résistance à l'effort de déconnexion dû à la mise en pression du circuit reste limitée, et insuffisante notamment pour des circuits dans lesquels le fluide est un liquide et dans lesquels peuvent se produire des coups de bélier.

Le propos de l'invention est un raccord rapide du type de ceux rappelés ci-dessus comportant des moyens par lesquels la résistance à la déconnexion est augmentée dans des proportions importantes. Le document US-4 146 254 constitue l'état de la technique le plus proche de l'invention au sens où il décrit des moyens qui raidissent les dents de retenue pour mieux mordre dans le tube à retenir. Ce raidissage n'est cependant pas optimal pour des rondelles dont les dents sont les plus souples ou les plus mobiles possible pour ne pas être gênantes à l'introduction de l'élément tubulaire. Le document FR2385024 décrit un dispositif comprenant un poussoir venant exercer un effort sur les dents de retenue pour mieux mordre dans le tube à retenir, afin de pouvoir s'adapter plus aisément au calibrage inconstant des tubes. Un tel dispositif ne renforce cependant pas la résistance de la connexion. L'invention propose donc une amélioration de cet état de la technique en remédiant à l'inconvénient ci-dessus.

### OBJET DE L'INVENTION

C'est ainsi que l'invention a pour objet un dispositif de raccordement d'un élément tubulaire comportant un corps pourvu d'un alésage pour recevoir l'extrémité de cet élément tubulaire et des moyens de retenue de l'élément tubulaire dans l'alésage comprenant au moins une rondelle élastiquement déformable et sensiblement tronconique dont la circonférence intérieure est de diamètre inférieur à celui de l'élément tubulaire et est divisée en une pluralité de dents, la partie extérieure de la rondelle étant disposée dans cet alésage entre un épaulement de ce dernier et une douille de retenue rapportée sur le corps à l'entrée de l'alésage, la douille de retenue constituant une mâchoire fixe d'appui d'une face de la rondelle tandis que le dispositif comprend une mâchoire mobile logée dans un chambrage de l'alésage, situé au-delà de l'épaulement par rapport à la mâchoire fixe, commandée en position par rapport à cette mâchoire fixe par la mise en pression du circuit pour serrer la rondelle contre la mâchoire fixe et la maintenir entre les deux mâchoires tant que le circuit est sous pression. Selon l'invention, les mâchoires ont en regard de l'une de l'autre des formes complémentaires permettant de serrer la rondelle sur une partie importante de la hauteur de chaque dent, et correspondant au profil et à la position que doit prendre chaque dent pour offrir une résistance maximale à l'effort d'extraction subi par l'élément tubulaire.

On crée ainsi un encastrement de la grande partie de la rondelle dont les dents sont devenues des griffes indéformables qui retiennent fermement le tube. Les efforts encaissés par cette fixation peuvent alors être importants et de l'ordre de ceux que l'on peut rencontrer à l'occasion de coups de bélier dans des circuits hydrauliques.

Dans un mode de réalisation préféré de l'invention, la mâchoire mobile est en forme de bague dont la face frontale tournée vers la rondelle impose avec la face complémentaire de la mâchoire fixe un profil radial de travail de la rondelle au niveau de chaque dent correspondant à sa résistance maximale à l'égard d'un effort d'extraction du tube. En d'autres termes, une rondelle comporte une couronne extérieure s'étendant au repos dans un plan radial de laquelle sont issues vers le centre des dents régulièrement réparties et portées par une surface sensiblement conique. Au passage de l'élément à connecter, les dents s'écartent et leur extrémité libre repose sur la surface de l'élément, prêts à s'y enfoncer si la matière de cet élément (tube) le permet ou retombe dans une gorge ménagée à la surface extérieure de cet élément (embout). De la sorte, un retrait de l'élément à connecter devient impossible parce qu'arrêté par les dents de la rondelle qui s'arc-boutent entre le corps du raccord et l'élément. On comprend que si les dents sont « encastrées » dans le corps du raccord, sur une partie importante de leur longueur, leur déformation élastique sous l'effet de l'arrachement du tube ou de l'embout est quasi impossible et la force de retenue est importante. Cet encastrement sera d'autant plus efficace que les deux mâchoires épouseront parfaitement les dents de la rondelle dans leur position de résistance maximale.

De manière préférée pour la mise en oeuvre de l'invention, on utilise des rondelles dans lesquelles chaque dent est une palette indéformable, ce qui lui permet d'être de longueur moindre que celle des dents flexibles. Les mâchoires ont une forme complémentaire correspondant au profil indéformable de chaque dent dans une inclinaison (position) par rapport au tube correspondant à l'efficacité maximale de la rondelle par rapport à l'effort d'extraction du tube ou de l'embout. Dans ces rondelles en effet, la déformation est concentrée dans la couronne de liaison de la racine des dents qui, indéformables, basculent vers l'arrière sous l'effort d'arrachement et atteignent ainsi une position optimale pour retenir l'élément connecté, position qui est figée par la forme des mâchoires de serrage.

Dans le cas de ces rondelles à dents indéformables, les mâchoires définissent un logement annulaire périphérique qui contient sans contrainte, lors de leur serrage, les parties déformables de la rondelle. En d'autres termes, les mâchoires sont pourvues d'un évidement annulaire extérieur tel que la couronne déformable de liaison de la racine des dents ne soit pas concernée par le serrage.

De manière connue, le dispositif comporte un joint d'étanchéité, torique, qui est situé derrière la mâchoire mobile dans le sens d'introduction de l'élément tubulaire, entre le tube et le chambrage. Ce joint est logé avec jeu axial dans ce chambrage et constitue un poussoir de la mâchoire mobile en direction de la mâchoire fixe.

De manière préférée, ce chambrage comporte deux sections axiales de diamètre différent, la première section contenant la mâchoire mobile étant celle de plus petit diamètre, reliée à l'autre (deuxième) section par une zone conique de transition. L'intérêt de cette disposition réside dans la déformation élastique du joint sous l'effet de la pression pour passer au moins partiellement de la deuxième à la première section, ce qui lui permet en l'absence de pression de retourner spontanément dans la partie de diamètre plus grand et dégager la mâchoire mobile de tout effort s'opposant à son écartement de la mâchoire fixe pour la libre action d'un poussoir de déconnexion. En effet, la mâchoire fixe peut comporter une couronne inférieure en forme de poussoir de soulèvement radial des dents pour permettre la déconnexion du tube.

Enfin, la face arrière de la mâchoire mobile comporte deux lèvres déformables radialement sous la pression du joint.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés parmi lesquels :
- les figures 1 à 3 illustrent par une même demi-vue en coupe axiale trois variantes de réalisation de l'invention,
- la figure 4 illustre le dispositif de l'invention en service sur un tube souple ou semi rigide,
- la figure 5 illustre le dispositif de l'invention coopérant avec un tube rigide (embout) à gorge externe.

### DESCRIPTION DETAILLEE DE L'INVENTION

A ces figures, les éléments identiques des dispositifs représentés portent les mêmes références.

Le dispositif de raccordement représenté comporte un corps 1 pourvu d'un alésage 2 pour recevoir l'extrémité d'un élément tubulaire 3 ou 4. Des moyens de retenue de l'élément tubulaire 3 ou 4 dans l'alésage sont constitués par une rondelle 5 élastiquement déformable avec une couronne extérieure 5a reliant périphériquement des dents 5b s'étendant le long d'une surface sensiblement tronconique dont la circonférence intérieure est de diamètre inférieur à celui de l'élément tubulaire 3 ou 4, la partie extérieure 5a de la rondelle étant disposée dans cet alésage entre un épaulement 6 de ce dernier et une douille 7 de retenue rapportée sur le corps à l'entrée de l'alésage 2.

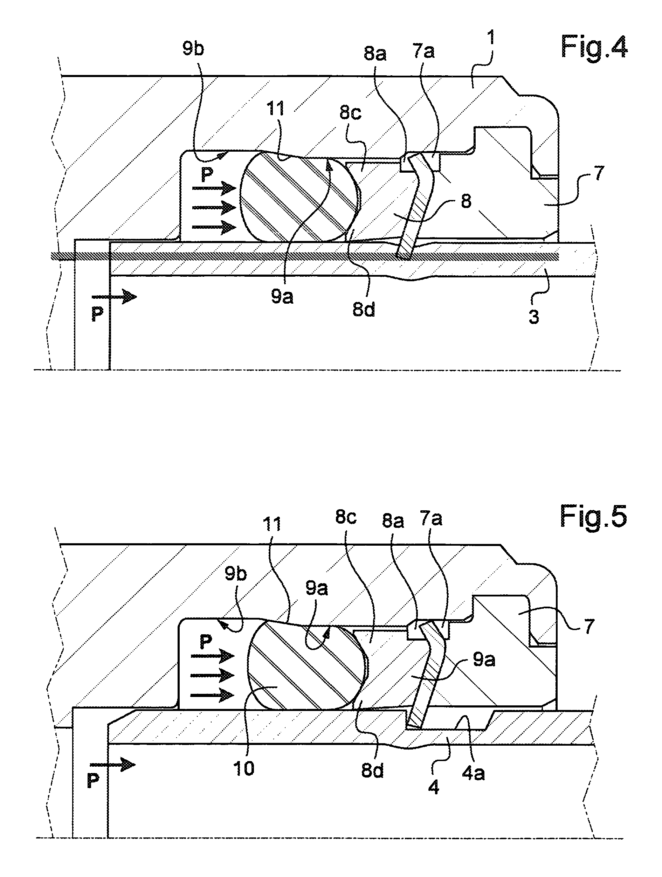

La douille de retenue 7 constitue une mâchoire fixe d'appui de la face 5b convexe de la rondelle 5. Une mâchoire mobile 8 est logée dans un chambrage 9 de l'alésage 2, situé au-delà de l'épaulement 6 par rapport à la mâchoire fixe 7. Cette mâchoire mobile 8 peut être commandée en rapprochement de la mâchoire fixe 7 par la mise en pression du circuit. La rondelle est ainsi serrée entre la mâchoire fixe 7 et la mâchoire mobile 8 sur une partie importante de la hauteur de chaque dent 5b dans une position de travail optimale (voir figures 4 et 5). Elle est maintenue encastrée entre ces deux mâchoires tant que le circuit est sous pression.

A l'arrière de la mâchoire mobile 8 qui se présente comme une bague annulaire, vu dans le sens A d'introduction de l'élément tubulaire 3 ou 4, le dispositif comporte un joint torique 10 qui assure l'étanchéité entre le chambrage 9 et l'élément tubulaire 3 ou 4. Quand la pression s'établit dans le raccord, après introduction de l'élément 3,4 à raccorder, le joint 10 est soumis à cette pression P et agit comme un piston annulaire qui est repoussé en direction de la bague 8 et entraîne celle-ci en direction de la bague 7. La rondelle 5 est alors prise en étau entre les deux mâchoires fixe 7 et mobile 8. Ce serrage confère à la rondelle la rigidité d'un véritable encastrement de cette dernière dans le corps 1 du raccord ce qui accroît de manière importante son pouvoir de retenue de l'élément 3,4 contre un effort d'extraction hors du corps 1.

La rondelle 5 est de celles qui possèdent des dents 5b en forme de palettes indéformables alors que la couronne 5a qui les relie est élastiquement déformable et autorise donc le pivotement des palettes. Un exemple de ce type de rondelle est décrit dans le document EP 616 161.

La partie active des mâchoires est telle que la couronne 5a périphérique extérieure de la rondelle 5 n'est pas concernée par le serrage de manière à préserver sa capacité à ne pas altérer ses caractéristiques par les forces de serrage. Pour ce faire, les mâchoires sont pourvues d'un évidement annulaire 7a et 8a qui constituent ensemble le logement susdit.

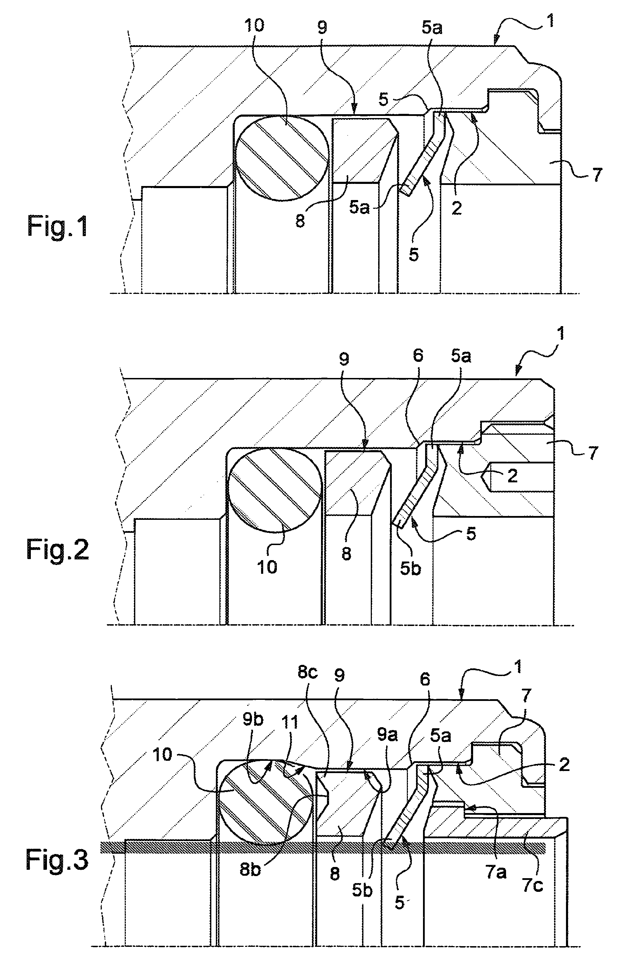

On remarque qu'à la figure 1, la douille de retenue 7 est montée de manière définitive sur le corps 1 si bien que le raccord est indémontable sans destruction.

A la figure 2, la douille 7 est vissée dans le corps 1 et le raccord est donc démontable si on retire la douille 7.

A la figure 3 la douille 7 est en deux parties l'une 7b fixée dans le corps 1 et une couronne intérieure 7c, mobile axialement par rapport à la partie fixe 7b et formant poussoir de soulèvement des dents 5b de la couronne 5. Ce poussoir, lors du serrage est en butée par un épaulement arrière 7d contre un épaulement correspondant 7e de la partie fixe 7b de manière à coopérer pleinement au serrage de la rondelle.

On notera également sur cette figure 3 que la face arrière 8b de la mâchoire 8 est creusée de manière à définir une lèvre extérieure 8c et une lèvre intérieure 8d qui, sous la pression du joint torique 10, peuvent s'évaser en divergeant et s'appliquer respectivement sur la paroi du chambrage 9 et sur l'élément tubulaire 3 ou 4 de manière à fermer le jeu existant par construction entre la mâchoire mobile 8 et ces deux éléments, et éviter l'extrusion du joint dans ce jeu sous l'effet de la pression du fluide.

Toujours en regard de la figure 3, on constate que le chambrage 9 est divisé en deux sections 9a et 9b axialement successives, la section 9a, de plus petit diamètre, contenant la mâchoire 8 et la section 9b, de diamètre plus grand, contenant le joint 10, en l'absence de pression dans le circuit.

Les deux sections sont reliées par une zone de transition conique 11 qui constitue un « entonnoir » de déformation du joint 10 quand il passe, au moins partiellement, sous l'effet de la pression, de la section 9b à la section 9a. Cette déformation élastique partielle du joint 10 lui confère le pouvoir de recouvrer sa forme libre lorsque la pression cesse et donc de ressortir spontanément de la section 9a du chambrage. Cela libère de la place pour la mâchoire 8 qui peut reculer sans gêner l'action du poussoir 7b lors de la déconnexion du dispositif.

Les figures 4 et 5 illustrent le comportement du joint 10 en service. La figure 4 montre la pénétration des dents 5 dans une extrémité de tube 3 qui est dans un matériau que les dents peuvent mordre alors que la figure 5 illustre la connexion d'un embout 4 portant une gorge extérieure 4a dans laquelle l'extrémité des dents 5 tombe élastiquement après avoir été soulevée lors de l'introduction de l'embout.

Ces deux figures illustrent également la complémentarité des formes des faces actives des mâchoires 7 et 8 qui retiennent les dents dans une inclinaison optimale pour la fonction de retenue du tube ou de l'embout dans l'alésage du corps 1.

Dans certains cas non représentés on met en oeuvre plusieurs rondelles 5 les unes dernières les autres pour augmenter le pouvoir anti-retrait du raccord.

## Revendications

1. Dispositif de raccordement d'un élément tubulaire (3,4) comportant un corps (1) pourvu d'un alésage (2) pour recevoir l'extrémité de cet élément tubulaire et des moyens de retenue de l'élément tubulaire (3,4) dans l'alésage (2) comprenant au moins une rondelle (5) élastiquement déformable et sensiblement tronconique dont la circonférence intérieure est de diamètre inférieur à celui de l'élément tubulaire (3,4) et est divisée en une pluralité de dents (5b), la partie extérieure (5a) de la rondelle étant disposée dans cet alésage (2) entre un épaulement (6) de ce dernier et une douille (7) de retenue rapportée sur le corps (1) à l'entrée de l'alésage (2), la douille de retenue (7) constituant une mâchoire fixe d'appui d'une face de la rondelle (5) tandis que le dispositif comprend une mâchoire mobile (8) logée dans un chambrage (9) de l'alésage (2) situé au-delà de l'épaulement (6) par rapport à la mâchoire fixe (7) et commandée en position par rapport à cette mâchoire fixe (7) par la mise en pression du circuit pour serrer la rondelle contre la mâchoire fixe (7) et la maintenir entre les deux mâchoires (7,8) tant que le circuit est sous pression, **caractérisé en ce que** les mâchoires ont en regard de l'une de l'autre des formes complémentaires permettant de serrer la rondelle sur une partie importante de la hauteur de chaque dent, et correspondant au profil et à la position que doit prendre chaque dent pour offrir une résistance maximale à l'effort d'extraction subi par l'élément tubulaire (3, 4).

2. Dispositif selon la revendication 1, **caractérisé en ce que** chaque dent (5b) est une palette indéformable et **en ce que** les mâchoires (7,8) définissent un logement annulaire périphérique (7a,8a) qui contient sans contrainte, lors de leur serrage, les parties déformables (5a) de la rondelle (5).

3. Dispositif selon l'une des revendications précédentes, **caractérisé en ce que** le poussoir de la mâchoire mobile (8) vers la mâchoire fixe (7) est formé par un joint torique (10) d'étanchéité, logé avec jeu axial dans le chambrage (9) après la mâchoire mobile dans le sens d'introduction de l'élément tubulaire (3,4).

4. Dispositif selon la revendication 3, **caractérisé en ce que** le chambrage (9) comporte deux sections axiales (9a,9b) de diamètre différent, la section (9a) contenant la mâchoire mobile (8) étant celle de plus petit diamètre reliée à l'autre section (9b) par une zone conique (11) de transition

5. Dispositif selon l'une des revendications précédentes, **caractérisé en ce que** la face arrière (8b) de la mâchoire mobile (8) comporte deux lèvres (8c et 8d) déformables radialement sous la pression du joint (10).

6. Dispositif selon l'une des revendications précédentes, **caractérisé en ce que** l'élément tubulaire est un tube (3) en matière apte à être pénétrée par les dents de la rondelle

7. Dispositif selon l'une des revendications 1 à 5, **caractérisé en ce que** l'élément tubulaire est un embout(4) possédant une gorge (4a) externe pour accueillir l'extrémité radiale intérieure des dents (5b) qui y retombe élastiquement après leur soulèvement par l'extrémité de l'embout.

8. Dispositif selon l'une des revendications précédentes, **caractérisé en ce que** la douille de retenue (7) comporte un poussoir (7b) de déconnexion.

## Patentansprüche

1. Verbindungsvorrichtung zum Verbinden eines rohrförmigen Elements (3, 4), umfassend einen Körper (1), der zur Aufnahme des Endes dieses rohrförmigen Elements mit einer Bohrung (2) sowie mit Haltemitteln zum Halten des rohrförmigen Elements (3, 4) in der Bohrung (2) versehen ist, die mindestens eine Ringscheibe (5) umfassen, die elastisch verformbar und im Wesentlichen kegelstumpfförmig ist und deren Innenumfang einen Durchmesser aufweist, der kleiner ist als der Durchmesser des rohrförmigen Elements (3, 4) und der in eine Vielzahl von Zähnen (5b) unterteilt ist, wobei der äußere Abschnitt (5a) der Ringscheibe in dieser Bohrung (2) zwischen einem Absatz (6) dieser Bohrung und einer Halte-Hülse (7) angeordnet ist, die an dem Körper (1) am Eingang der Bohrung (2) eingesetzt ist, wobei die Halte-Hülse (7) eine feste Spannbacke zur Auflage auf einer Seite der Ringscheibe (5) bildet, während die Vorrichtung eine bewegliche Spannbacke (8) umfasst, die in einer Einsenkung (9) der Bohrung (2), die sich jenseits des Absatzes (6) relativ zur festen Spannbacke (7) befindet, gelagert ist und relativ zu dieser festen Spannbacke (7) durch Druckbeaufschlagung der Leitung eingestellt wird, um die Ringscheibe gegen die feste Spannbacke (7) zu drücken und sie zwischen den beiden Spannbacken (7, 8) zu halten, solange die Leitung unter Druck steht, **dadurch gekennzeichnet, dass** die einander gegenüberliegenden Spannbacken komplementäre Formen haben, die es ermöglichen, dass die Ringscheibe über einen großen Abschnitt der Höhe eines jeden Zahns eingespannt wird, und dem Profil und der Position entsprechen, die jeder Zahn einnehmen kann, um einen maximalen Widerstand gegenüber der Zugbeanspruchung, der das rohrförmige Element (3, 4) unterworfen ist, zu leisten.

2. Vorrichtung nach Anspruch 1, **dadurch gekennzeichnet, dass** jeder Zahn eine formbeständige Platte ist und dass die Spannbacken (7, 8) eine ringförmige, periphere Aufnahme (7a, 8a) begrenzen, die die verformbaren Abschnitte (5a) der Ringscheibe (5) während ihres Einspannens ohne Spannung aufnimmt.

3. Vorrichtung nach einem der vorhergehenden Ansprüche, **dadurch gekennzeichnet, dass** der Stößel zum Drücken der beweglichen Spannbacke (8) in Richtung der festen Spannbacke (7) von einem O-Dichtring (10) gebildet ist, der mit axialem Spiel in der Einsenkung (9) in Einführrichtung des rohrförmigen Elements (3, 4) hinter der beweglichen Spannbacke gelagert ist.

4. Vorrichtung nach Anspruch 3, **dadurch gekennzeichnet, dass** die Einsenkung (9) zwei axiale Abschnitte (9a, 9b) mit unterschiedlichem Durchmesser umfasst, wobei der Abschnitt (9a), der die bewegliche Spannbacke aufnimmt, der Abschnitt mit dem kleineren Durchmesser ist, der mit dem anderen Abschnitt (9b) durch einen kegelförmigen Übergangsbereich (11) verbunden ist.

5. Vorrichtung nach einem der vorhergehenden Ansprüche, **dadurch gekennzeichnet, dass** die Rückseite (8b) der beweglichen Spannbacke (8) zwei Lippen (8c und 8d) umfasst, die unter Druck des Dichtrings (10) radial verformbar sind.

6. Vorrichtung nach einem der vorhergehenden Ansprüche, **dadurch gekennzeichnet, dass** das rohrförmige Element ein Rohr (3) aus einem Werkstoff ist, der durch die Zähne der Ringscheibe durchdrungen werden kann.

7. Vorrichtung nach einem der Ansprüche 1 bis 5, **dadurch gekennzeichnet, dass** das rohrförmige Element ein Anschlussstück (4) mit einer externen Nut (4a) zur Aufnahme des radialen inneren Endes der Zähne (5b) ist, die nach ihrem Anheben durch das Ende des Anschlussstücks wieder elastisch dahin zurückfallen.

8. Vorrichtung nach einem der vorhergehenden Ansprüche, **dadurch gekennzeichnet, dass** die Haltehülse (7) einen Stößel (7b) umfasst,

## Claims

1. Device for coupling a tubular element (3, 4), the device comprising a body (1) provided with a bore (2) for receiving the end of the tubular element and retaining means for retaining the tubular element (3, 4) in the bore (2), the retaining means comprising at least one washer (5) that is elastically deformable and substantially frustoconical, with the inside circumference thereof being of diameter less than the diameter of the tubular element (3, 4), and being subdivided into a plurality of teeth (5b), the outer portion (5a) of the washer being arranged in said bore (2) between a shoulder (6) thereof and a retaining bushing (7) fitted to the body (1) at the inlet of the bore (2), the retaining bushing (7) constituting a stationary jaw against which one face of the washer (5) bears, while the device includes a movable jaw (8) housed in a setback (9) of the bore (2) situated beyond the shoulder (6) relative to the stationary jaw (7) and controlled in position relative to the stationary jaw (7) by pressurizing the circuit so as to clamp the washer against the stationary jaw (7) and hold it between the two jaws (7, 8) so long as the circuit is under pressure, the device being **characterized in that** the jaws present facing complementary shapes enabling to clamp the washer that correspond over a large portion of the height of each tooth to the profile of each tooth and to the position that each tooth is to occupy in order to offer maximum resistance to the extraction force to which the tubular element (3, 4) is subjected.

2. The device according to claim 1, **characterized in that** each tooth (5b) is a non-deformable blade and **in that** the jaws (7, 8) define a peripheral annular housing (7a, 8a) that contains the deformable portions (5a) of the washer (5) without stressing them during clamping.

3. The device according to either preceding claim, **characterized in that** a pusher for pushing the movable jaw (8) towards the stationary jaw (7) is formed by a sealing O-ring (10) received with axial clearance in the setback (9) after the movable jaw in the direction in which the tubular element (3, 4) is inserted.

4. The device according to claim 3, **characterized in that** the setback (9) has two axial sections (9a, 9b) of different diameters, the section (9a) containing the movable jaw (8) being the section of smaller diameter and being connected to the other section (9b) via a conical transition zone (11).

5. The device according to any preceding claim, **characterized in that** the rear face (8b) of the movable jaw (8) has two lips (8c and 8d) that are radially deformable under pressure from the 0-ring (10).

6. The device according to any preceding claim, **characterized in that** the tubular element is a tube (3) of material suitable for being penetrated by the teeth of the washer.

7. The device according to any one of claims 1 to 5, **characterized in that** the tubular element is an endpiece (4) possessing an outer groove (4a) for receiving the radially inner ends of the teeth (5b) that drop back resiliently therein after being raised by the end of the endpiece.

8. The device according to any preceding claim, **characterized in that** the retaining bushing (7) includes a disconnection pusher (7b).
